# EUROPEAN PATENT APPLICATION

(11) **EP 2 708 984 A2**
(43) Date of publication of application: **19.03.2014**
(21) Application number: 13161659.1
(22) Date of filing: 28.03.2013
(51) Int. Cl.: G06F 3/038, G06F 3/0481

(54) **Display Apparatus for Multiuser and Method Thereof**

(30) Priority: 12.09.2012 KR 20120101165
(71) Applicant: Samsung Electronics Co., Ltd., Gyeonggi-do 443-742 (KR)
(72) Inventor: Kwon, Oh-in, Seoul (KR)
(74) Representative: Instone, Terry

(57) **Abstract**

A display apparatus for use in a multiuser environment and a method of controlling the display apparatus, processes a plurality of input signals to display the plurality of input signals on one display. The display apparatus may include an interface which is connected to a plurality of input means, a storage which stores display attribute information respectively set with respect to the plurality of input means, a display processor which generates a plurality of display objects having display attributes respectively corresponding to the plurality of input means, a display which displays the plurality of display objects, and a controller which, if accesses to the plurality of display objects are tried by using the plurality of input means, limitedly permits the accesses based on correspondence relations between the plurality of input means and the plurality of display objects.

## Description

### BACKGROUND

### 1. Field

The disclosure herein generally relates to a display apparatus and a method thereof, and more particularly, to a display apparatus shared by multiple users in a multiuser environment, and a method thereof.

### 2. Description of the Related Art

A display apparatus may refer to an apparatus which displays a result of a command or a signal processed by a controller as an image to a user. An interface of the display apparatus may be designed on the assumption that one user may use the display apparatus. Therefore, if multiple users perform their jobs by using one display apparatus, they are not able to perform their jobs due to collisions or interruptions between input commands. A plurality of input apparatuses, such as a keyboard, a mouse, a joystick, etc., may be connected to one display apparatus. However, even in this case, the display apparatus does not support a mechanism which is to classify users according to signals input from the plurality of input apparatuses in order to separately use applications for the users.

A single user mainly uses one display apparatus, and thus input processing performed by multiple users is hardly required. However, high-resolution, large display apparatuses are increasingly being used, and a technique for allowing several users to simultaneously use a display apparatus by using a plurality of input devices is required.

It is assumed that one user uses one display apparatus. Although a plurality of applications are driven, only one application has a focus of an input apparatus at a time. Also, although a plurality of apparatuses give data, a key input/pointer input signal is generated and processed as one input stream. Therefore, even if a plurality of input apparatuses are connected to a display apparatus, several applications may not be used simultaneously. For example, although N keyboard input apparatuses are connected, and N word processor applications are driven, only one word processor application may be text-edited at a time on a single display apparatus. In other words, a method of supporting a multi-focus and a multi-input stream is required. Also, since a plurality of users are not considered for operation scenarios of a user interface (UI) object such as a data input, pop-up window processing, etc., an arbitrary user may receive an ack message or operate a menu of another user. In other words, usability hindrance elements may occur. A method of solving these obstacles is required.

In summary, a method of operating a conventional display apparatus deals with only a scenario of one user. Therefore, there are required new approaches to a method of processing an input apparatus, a method of operating an application screen, a method of identifying a plurality of users, and so on, in order to provide a display apparatus which may be simultaneously used by several users.

### SUMMARY

According to the present invention there is provided an apparatus and method as set forth in the appended claims. Other features of the invention will be apparent from the dependent claims, and the description which follows.

Additional aspects and/or advantages will be set forth in part in the description which follows and, in part, will be apparent from the description, or may be learned by practice of the invention.

Exemplary embodiments address at least the above problems and/or disadvantages and other disadvantages not described above. Also, the exemplary embodiments are not necessarily required to overcome the disadvantages described above, and an exemplary embodiment may not overcome any of the problems described above.

The exemplary embodiments provide a display apparatus for processing a plurality of input signals input from a plurality of input apparatuses and a method thereof.

According to an aspect of the exemplary embodiments, there is provided a display apparatus including: an interface which is connected to a plurality of input means; a storage which stores display attribute information respectively set with respect to the plurality of input means; a display processor which generates a plurality of display objects having display attributes respectively corresponding to the plurality of input means by using the display attribute information respectively set with respect to the plurality of input means; a display which displays the plurality of display objects on one screen; and a controller which, if accesses to the plurality of display objects are tried by using the plurality of input means, limitedly permits the accesses based on correspondence relations between the plurality of input means and the plurality of display objects.

If a first user access to a first display object having a display attribute corresponding to a first input means of the plurality of input means is performed by using the first input means, the controller may control the display processor to change a display state of the first display object according to the first user access. If a second user access to the first display object is performed by using the other input means except the first input mean, the controller may ignore the second user access.

The controller may generate cursors having display attributes respectively set to the plurality of input means, display the cursors on the screen of the display, move corresponding cursors according to move commands input through the plurality of input means, and, if the cursors are moved to the display objects to which accesses are limited, control the display processor to change a display state of a corresponding cursor.

At least one of the plurality of display objects may be a shared object which is accessible by the plurality of input means.

The shared object may be an application icon. If the application icon is selected by a first input means of the plurality of input means, the controller may execute an application corresponding to the application icon, and generate and display an execution screen of the application according to a display attribute corresponding to the first input means.

The plurality of input means may include at least one of a keyboard, a mouse, a joystick, an electronic pen, a track ball, a remote controller, a portable phone, and a tablet PC.

The display apparatus may further include a microphone which receives a user voice signal. The storage may store display attribute information respectively set with respect to users. If the user voice signal is input, the controller may control the display processor and the display to generate and display a display object having a display attribute corresponding to the user voice signal.

The display apparatus may further include at least one camera which captures a user. The storage may store display attribute information respectively set with respect to users, and the controller may control the display processor and the display to generate and display a display object having a display attribute corresponding to the user captured by the camera.

The display attribute may be at least one of a shape, a color, a size, a border image, a title label, and a background image.

According to another aspect of the exemplary embodiments, there is provided a method of controlling a display apparatus. The method may include: generating a plurality of display objects having display attributes respectively corresponding to a plurality of input means connected to the display apparatus by using display attribute information respectively set with respect to the plurality of input means; displaying the plurality of display objects on one screen; and if accesses to the plurality of display objects are tried by using the plurality of input means, limitedly permitting the accesses based on correspondence relations between the plurality of input means and the plurality of display objects.

The displaying of the plurality of display objects may include: if a first user access to a first display object having a display attribute corresponding to a first input means of the plurality of input means is performed by using the first input means, changing a display state of the first display object according to the first user access. The limitedly permitting of the accesses may include: if a second user access to the first display object is performed by using the other input means except the first input mean, ignoring the second user access.

The displaying of the plurality of display objects may include: generating cursors having display attributes respectively set to the plurality of input means, displaying the cursors on the screen of the display, moving corresponding cursors according to move commands input through the plurality of input means, and, if the cursors are moved to the display objects to which accesses are limited, changing a display state of a corresponding cursor.

At least one of the plurality of display objects may be a shared object which is accessible by the plurality of input means.

The shared object may be an application icon. The generation of the display object may include: if the application icon is selected by a first input means of the plurality of input means, executing an application corresponding to the application icon, and generating and displaying an execution screen of the application according to a display attribute corresponding to the first input means.

The plurality of input means may include at least one of a keyboard, a mouse, a joystick, an electronic pen, a track ball, a remote controller, a portable phone, and a tablet PC.

The method may further include: receiving a user voice signal; and storing display attribute information respectively set with respect to users. The generation of the display object may include: if the user voice signal is input, generating a display object having a display attribute corresponding to the user voice signal.

The method may further include: capturing a user; and storing display attribute information respectively set with respect to users. The generation of the display object may include: generating a display object having a display attribute corresponding to the captured user.

The display attribute may be at least one of a shape, a color, a size, a border image, a title label, and a background image.

According to another aspect of the exemplary embodiments, a display apparatus may include an interface connected to a plurality of input devices, a storage to respectively store display attribute information corresponding to each of the plurality of input devices, a display to display a plurality of display objects having display attributes, and a controller to determine whether to grant access to a first display object by a first input device based on whether the first input device corresponds to display attribute information of the first display object. The controller may permit access to the first display object by the first input device if the display attribute information of the first display object corresponds to the first input device, and the controller may prohibit access to the first display object by the first input device if the display attribute information of the first display object does not correspond to the first input device.

The display apparatus may further include a user registration manager to receive input signals from the plurality of input devices and to generate respective profiles corresponding to the plurality of input devices, wherein each profile may be stored in the storage and include display attribute information of display objects corresponding to the respective input device. The display apparatus may further include a display object manager to search the storage for a corresponding profile when a respective input device inputs an input signal, and to set an attribute of a display object to correspond to a corresponding attribute of the input device inputting the input signal.

According to another aspect of the exemplary embodiments, a method of controlling a display apparatus may include displaying a plurality of display objects, each of the display objects having display attributes corresponding to an input device among a plurality of input devices connected to the display apparatus, and determining whether to grant access to a first display object by a first input device based on whether the first input device corresponds to display attribute information of the first display object.

As described above, according to various exemplary embodiments of the disclosure, a plurality of input signals may be processed to be displayed on one screen of a display apparatus.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a display apparatus according to an exemplary embodiment of the present general inventive concept;
FIG. 2 is a view illustrating a display method using display attributes according to an exemplary embodiment of the present general inventive concept;
FIG. 3 is a view illustrating a system hierarchy according to an exemplary embodiment of the present general inventive concept;
FIG. 4 is a view illustrating a display apparatus to which a plurality of input apparatuses are connected, according to an exemplary embodiment of the present general inventive concept;
FIG. 5 is a view illustrating a display apparatus in a multiuser environment according to an exemplary embodiment of the present general inventive concept;
FIGS. 6 through 11 are views illustrating a user interface (UI) screen according to an exemplary embodiment of the present general inventive concept;
FIG. 12 is a flowchart illustrating a method of controlling a display apparatus according to an exemplary embodiment of the present general inventive concept;
FIG. 13 is a flowchart illustrating a method of controlling a display apparatus by using a user voice according to an exemplary embodiment of the present general inventive concept; and
FIG. 14 is a flowchart illustrating a method of controlling a display apparatus by using a user gesture according to an exemplary embodiment of the present general inventive concept.

### DETAILED DESCRIPTION

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

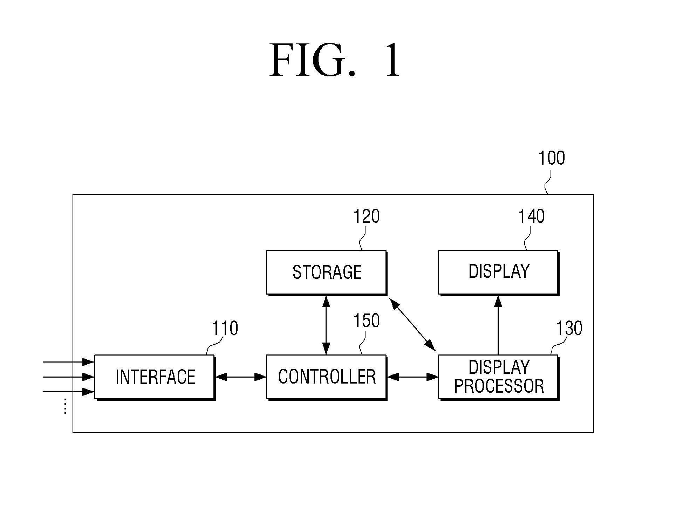

FIG. 1 is a block diagram of a display apparatus 100 according to an exemplary embodiment of the present general inventive concept

Referring to FIG. 1, the display apparatus 100 includes an interface 110, a storage 120, a display processor 130, a display 140, and a controller 150. The interface 110 receives a signal from an input means. The interface 110 may be connected to one or more input means over a wired or wireless network, for example. The storage 120 stores display attribute information which is set with respect to each input means. The display attribute information refers to information about an attribute of a display object displayed on a screen. The display object refers to a physical and virtual medium constituting a UI through which a user and a display apparatus communicate with each other. For example, the display object refers to a pointer, an icon, a folder, or the like, and the display attribute information refers to information such as a characteristic of a mouse pointer, a shape of an execution window, an attribute of a background image, or the like.

The display processor 130 generates a plurality of display objects having display attributes respectively corresponding to a plurality of input means, by using display attribute information respectively set with respect to the plurality of input means.

The display 140 displays at least one or more display objects on one screen. The display 140 may include a liquid crystal display (LCD), a light emitting diode (LED) display, an organic light emitting diode (OLED) display, for example. However, the disclosure is not so limited and may include other types of displays.

The controller 150 controls the interface 110, the storage 120, and the display processors 130 and controls the display 140 through the display processor 130. If an access to one or more display objects are tried by using one or more input means, the controller 150 limitedly allows the access based on a correspondence relation between each of the input means and each of the display objects. The storage 120 may be embodied as a non-transitory computer readable medium, including hard disks, floppy disks, flash memory or memory cards (e.g., a USB drive), a ROM, a blue-ray disk, or optical media such as CD ROM discs and DVDs.

As described above, a display of a display object and an access to an input means are determined according to attribute information of the display object corresponding to the input means. Therefore, an operation of generating a display object having a display attribute corresponding to an input means will now be described.

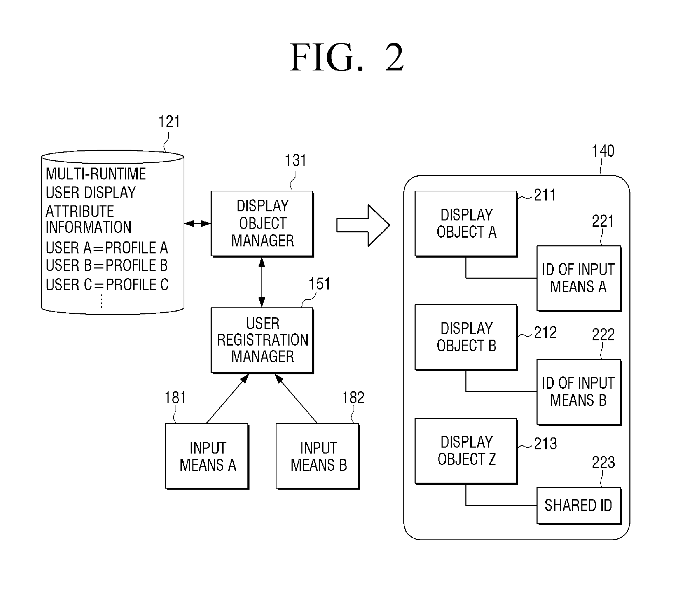

FIG. 2 is a view illustrating a display method using a display attribute according to an exemplary embodiment of the present general inventive concept.

Referring to FIG. 2, a user registration manager 151 receives an input signal and an identification (ID) from input means A or B 181 or 182 and generates profile A or B corresponding to the input means A or B 181 or 182. Here, it is noted that there may be more than two input means and the disclosure is not limited to only two input means, which is merely used as one example for ease of illustrating the inventive concepts disclosed herein. Each profile includes display attribute information of a display object corresponding to an input means. Examples of a display attribute of the display object include a shape, a color, a size, or a characteristic of a pointer, a shape, a color, a size, or an orientation of an icon, a shape, a color, a size, or an orientation of a folder, a font, a shape, a color, or an item of a menu, a font, a shape, or a color of an execution window, a title label, a border image, a background images, and so on. Other attribute information may include permission rights. Therefore, the profile A may include data corresponding to user A (or the input means A) and may include information about a display object. For example, the information may indicate that shapes of a pointer and shapes of an execution window are squares, and that colors of the pointer and colors of the execution window are yellow. A display attribute of a display object may be set or changed by using a corresponding input means. If input means are initially connected to the display apparatus 100, display attribute information respectively corresponding to the input means may be set to a preset initial value. That is, when the input means are first connected to the display apparatus 100, preset initial values may be utilized as the display attribute information. In another embodiment, when the input means are subsequently connected, the user registration manager 151 may recognize that the input means were previously connected and display attribute information corresponding to the input means. Such attribute information may be retrieved based on the profile corresponding to the input means.

A profile including the display attribute information respectively corresponding to the input means is checked as attribute information by a display object manager 131 and stored as runtime user display attribute information 121 in the storage 120. The runtime user display attribute information 121 is characteristic information respectively corresponding to input means. The runtime user display attribute information 121 indicates that input commands are simultaneously input from multiple users in a multiuser environment. Therefore, users are respectively expressed with A, B, and C in the runtime user display attribute information 121 of FIG. 2. Profiles A, B, and C include display attributes of display objects respectively corresponding to the users A, B, and C (or the input means).

If the input means A or B inputs an input signal, the display object manager 131 searches the runtime user display attribute information 121 stored in the storage 120 for the profile A or B corresponding to the input means A or B. An attribute of each display object is set by using a display attribute of the searched profile A or B. In other words, an attribute of a display object A 211 is set to a corresponding attribute of the profile A, and an ID 221 of the input means A is attached to the display object A 211. An attribute of a display object B 212 is set to a corresponding attribute of the profile B, and an ID 222 of the input means B is attached to the display object B 212. Since a display object Z 213 is a shared attribute object, an ID 223 is attached to the display object Z 213. Alternatively, an ID may not be attached to the shared attribute object, and the shared attribute object may be set to a null value. The display objects A, B, and C 211, 212, and 213 are displayed on the display 140. An ID attached to each display object is an internally set value and is not displayed on the display 140.

A method of classifying and displaying a plurality of display objects has been described with reference to FIG. 2. A method of simultaneously executing a plurality of display objects will now be described by using a system hierarchy.

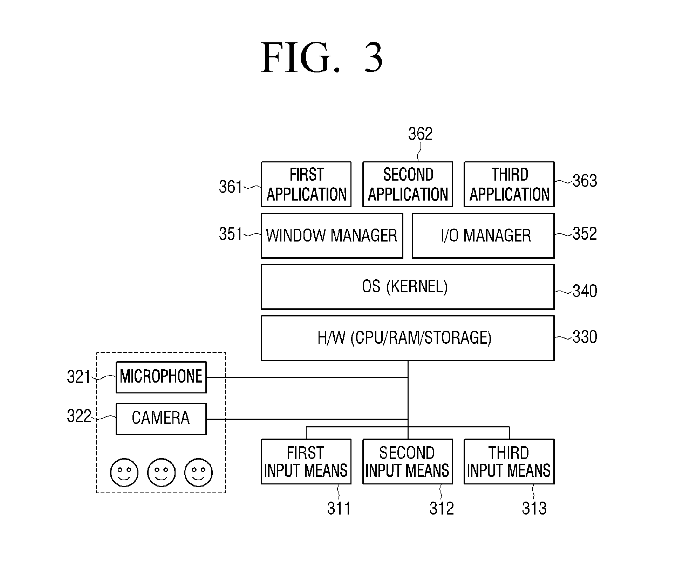

FIG. 3 is a view illustrating a system hierarchy according to an exemplary embodiment of the present general inventive concept.

Referring to the example embodiment of FIG. 3, a plurality of input means 311, 312, and 313 are connected to the display apparatus 100. A microphone 321 or a camera 322 may be connected to receive voices or gestures from a plurality of users. Inputs by using the voices or gestures of the users may be constituted separately from the plurality of input means 311, 312, and 313 and may be used along with the plurality of input means 311, and 312, and 313. Alternatively, only the voices or the gestures of the users may be used as input means.

A reference voice may be required to distinguish input means according to the voices of the users. Therefore, the display apparatus 100 pre-receives predetermined voice information through the microphone and pre-stores the voice information in the storage 120. The stored voice information operates as an identification (ID) of a physical input means. If a voice of a user is input, the display apparatus 100 generates a profile based on the pre-stored reference voice and applies the generated profile to a display object. For example, if a first user supplies a voice sample beforehand, the first user's voice sample is stored in the storage as a reference voice corresponding to the first user. When the first user subsequently provides an input by a voice command using the microphone (a first input means), the display apparatus 100 may use the pre-stored reference voice to recognize the first user and to associate the voice with the first input means, thereby applying a corresponding profile to a display object. A plurality of microphones may be used to receive voice information.

A reference image may be required to distinguish input means according to images of the users. Therefore, the display apparatus 100 pre-receives predetermined image information through the camera 322 and pre-stores the predetermined image information in the storage 120. The pre-stored image information operates as an ID of a physical input means. The reference image may be a face image of a user, however other body parts may be captured by the camera and used for identifying a user. Alternatively, a captured predetermined gesture image or a series of gesture set images may be used as the reference image. By way of example, a face image of a first user may be captured and pre-stored in storage 120 as a reference image. When the first user operates a first input means the display apparatus 100 may use the reference image to recognize the first user and associate the reference image with the first input means to thereby apply a corresponding profile to a display object.

Two or more microphones 321 may be included to input a stereo voice, and a plurality of cameras 322 may be included to input various types of gestures, or to capture a three-dimensional (3D) image. As described above, various types of input means may be connected to the display apparatus 100 by a wired or wireless network connection. Signals generated from the various types of input means are input into hardware H/W 330. Components of the H/W 330 are as described with reference to FIG. 1 and may include the interface 110, the storage 120, the display processor 130, the display 140, and the controller 150, and thus their descriptions will be omitted herein.

An operation system (OS) (kernel) layer 340 may exist on the H/W 330. The OS (kernel) layer 340 slices a time or uses a multi-core central processing unit (CPU) to simultaneously execute a plurality of applications. A window manager 351 and an Input/Output (I/O) manager 352 exist on the OS (kernel) layer 340. The window manager 351 manages general OS and CPU resources. The I/O manager 352 distributes input data in relation to whether a right to each input unit is permitted or manages output attribute information (e.g., a control focus, a pointer motion, a layout, and so on).

A plurality of application programs 361, 362, and 363 may exist on the window manager 351 and the I/O manager 352. Here, it is noted that there may be more than three application programs and the disclosure is not limited to only three application programs, which is merely used as one example in FIG. 3 for ease of illustrating the inventive concepts disclosed herein.

An internal structure of the display apparatus 100 has been described until now, and thus the display apparatus 100 connected to various types of input means will now be described.

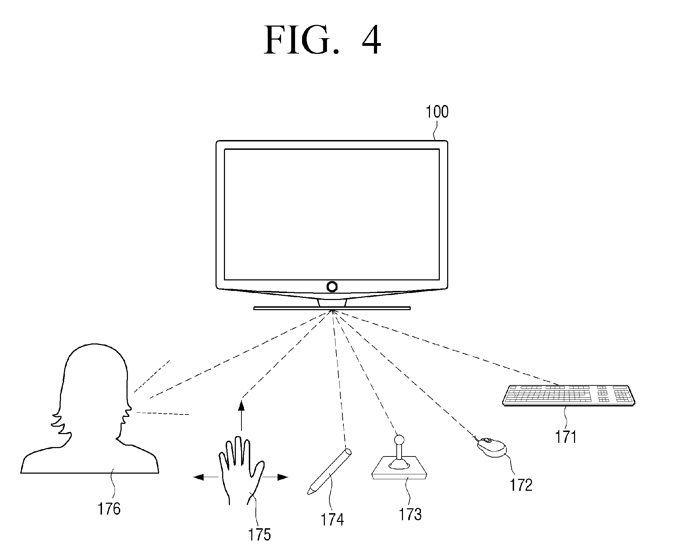

FIG. 4 is a view illustrating the display apparatus 100 to which a plurality of input apparatuses are connected, according to an exemplary embodiment of the present general inventive concept.

Referring to FIG. 4, the display apparatus 100 may be connected to various types of input means. The input means may include a keyboard 171, a mouse 172, a joystick 173, an electronic pen 174, a body part 175, an input sound (e.g., a voice) 176, a track ball (not shown), a remote controller (not shown), a portable phone (not shown), a tablet PC (not shown), a pedal or footswitch (not shown), a virtual-reality device (not shown), and so on. The controller 150 may recognize the input means as input means of a user one by one according to types of the input means. For example, the controller 150 may recognize first and second keyboards as input means of first and second users. If one mouse is additionally connected, the controller may recognize the mouse as an input means of the first user. The mouse recognized as the input means of the first user may be changed into the input means of the second user through a setup menu. If a plurality of input means are recognized as input means of the same user as described above, a profile of the same user is applied to display objects respectively corresponding to the plurality of input means.

Besides the above-described input means, a voice 176 or a gesture 175 of a user may be an input means of the display apparatus 100.

The input means and the display apparatus 100 may be connected to each other by a wired or wireless network connection. The network may include a local area network (LAN), wireless local area network (WLAN), wide area network (WAN), personal area network (PAN), virtual private network (VPN), or the like. The display apparatus 100 may include a plurality of connectors such as USB 2.0, USB 3.0, HDMI, IEEE 1394,or the like, to be connected to various types of input means by a wired connection. Alternatively, if the display apparatus 100 is connected to an input means by a wireless connection, the display apparatus 100 may include a wireless communication module (not shown). The wireless communication module may be controlled by the controller 150 and supports IEEE802.11x of Institute of Electrical and Electronics Engineers (IEEE), as one example. The input means and the display apparatus 100 may be wirelessly connected to each other by using wireless connections including Bluetooth, Infrared Data Association (IrDA), or the like, and may support other IEEE 802 standards.

A display method of a display apparatus using characteristic attribute information of display objects respectively corresponding to input means will now be described.

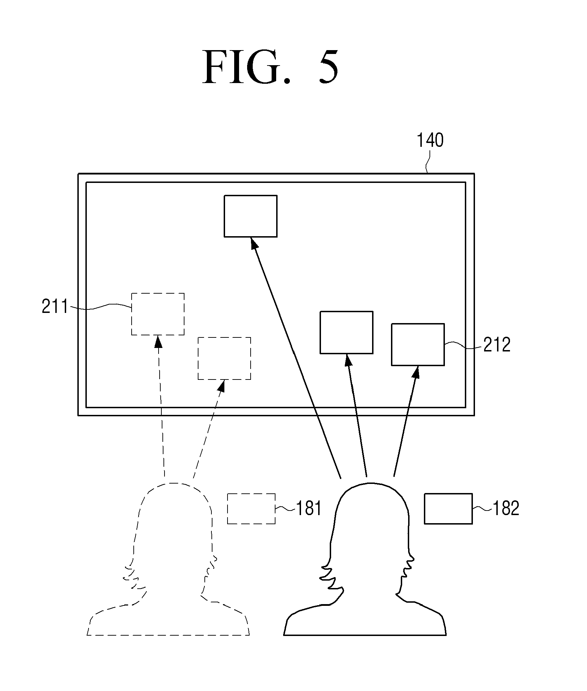

FIG. 5 is a view illustrating a display apparatus in a multiuser environment according to an exemplary embodiment of the present general inventive concept.

Referring to the example embodiment of FIG. 5, two users input signals into the display apparatus by using two input means 181 and 182. A controller and a display processor process the input signals and display display objects on a display 140. A first display object 211 refers to a display object corresponding to the first input means 181, and a second display object 212 refers to a display object corresponding to the second input means 182. As shown in FIG. 5, the display 140 may display a plurality of display objects corresponding to the first and second input means 181 and 182. Also, as described above, a plurality of input means may be connected to the display apparatus 100.

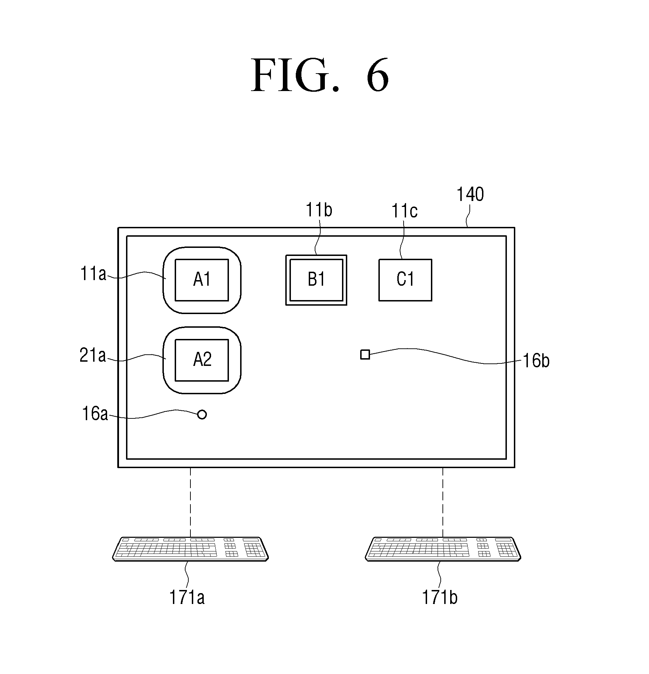

FIGS. 6 through 11 are views illustrating a user interface (UI) screen according to an exemplary embodiment of the present general inventive concept.

Referring to FIG. 6, first and second input means 171a and 172b are connected to a display apparatus. As described with reference to FIGS. 1 and 2, the display processor 130 and the controller 150 apply display attribute information to display objects respectively corresponding to respective input means and then display the display objects on the display 140. As described with reference to FIG. 4, the controller 150 may recognize a plurality of different types of input means (e.g., a keyboard and a mouse) as input means of the same user to apply the same user profile to the plurality of different types of input means. As described with reference to FIG. 6, A1 and A2 folders 11a and 21a and a first pointer 16a are displayed as display objects corresponding to the first input means 171a on the display 140. Also, B1 folder 11b and a second pointer 16b are displayed as display objects corresponding to the second input means 171b. C1 folder 11c displayed on the display 140 refers to a folder having a sharing attribute.

Attributes of folders corresponding to the first input means 171a are designated with circular borders. Therefore, the A1 and A2 folders 11a and 21a have circular borders. Also, an attribute of the first pointer 16a is designated with a circle, and thus the first pointer 16a having a circular shape is displayed on the display 140. Attributes of folders corresponding to the second input means 171b are designated with square borders. Therefore, the B1 folder 11b has a square border. Also, an attribute of the second pointer 16b is designated with a square, and the second pointer 16b having a square shape is displayed on the display 140. The C1 folder 11c having the sharing attribute has no border attribute and thus is displayed as a folder having no border. Other shapes (e.g., a triangular border, hexagonal, etc.) may be used than those described with respect to FIG. 6. Further, other approaches may be utilized to distinguish an object as corresponding to a specific input means. For example, an object (e.g., a folder) may be highlighted or identified using a particular color (e.g., blue) to correspond to the first input means, while a second object may be highlighted or identified using the color red to correspond to a second input means. As another example, an object (e.g., a folder) may have a solid border to correspond to the first input means, while a second object may have a dashed or broken border to correspond to a second input means.

Although an access signal for one display object is input through each input means, the controller 150 controls each input means to access characteristic attribute information applied to the display object or to ignore the access to the characteristic attribute information.

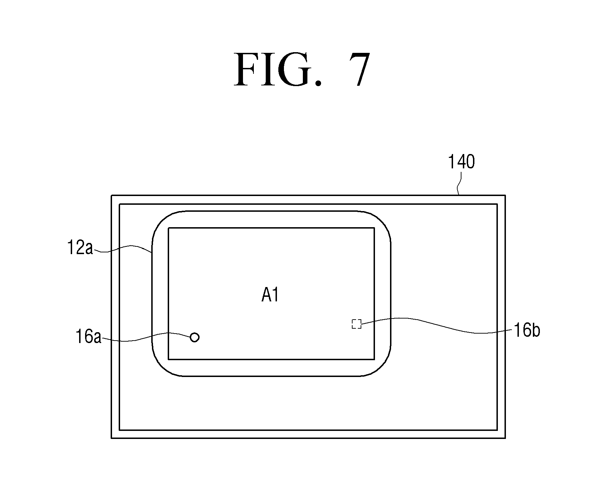

Referring to FIG. 7, a user clicks the A1 folder 12a having an attribute corresponding to the first input means 171a by using the first input means 171a. Therefore, the A1 folder 12a is displayed as an execution window for displaying a list on the display 140. Here, an attribute of the first input means 171a is designated with a circular border, and thus a border of the A1 folder 12a is expressed with a circle. The first pointer 16a has an attribute (hereinafter, referred to as a first attribute) corresponding to the first input means 171a, and the second pointer 16b has an attribute (hereinafter, referred to as a second attribute) corresponding to the second input means 171b.

If a first user access to the A1 folder 11a having a display attribute corresponding to the first input means 171a of a plurality of input means is performed by using the first input means 171a, the controller 150 may change a display state of the A1 folder 11a according to the first user access. An input position of the first input means 171a may be recognized by a user through the first pointer 16a.

However, if a second user access is performed by using the second input unit 171b, the controller 150 ignores the second user access. In other words, although the second pointer 16b having a second attribute accesses the A1 folder 12a having a first attribute, any input by using the second input unit 171b is not performed (i.e., the input is ignored or prohibited). Alternatively, if the second pointer 16b moves to the A1 folder 12a, the controller 150 may change a display state of the A1 folder 12a so that the A1 folder 12a becomes transparent or translucent or may set the A1 folder 12a to be bounced. The controller 150 may change the display state of the folder using other approaches, with one desired outcome being to alert or communicate to the user of the second input unit 171b that the access to the A1 folder 12a is not possible using the second input unit 171b. For example, the display apparatus may display a message or graphic indicating that the access is prohibited by the second input unit 171b, or the display apparatus may output a sound via a speaker indicating that the access is prohibited by the second input unit 171b.

As described above, a first or second user accesses the A1 folder 12a having the first attribute by using the first or second input means 171a or 171b. However, a display object is not limited to a folder and thus may be applied to other types of display object such as an icon or a menu window, for example.

However, the first or second input means 171a and 171b may access a display object having a sharing attribute regardless of an attribute. Therefore, a folder which has a sharing attribute and is displayed on the display 140 may be accessed by the first or second input means 171a or 171b. in other words, the C1 folder 12c may be executed and accessed by the first pointer 16a having the first attribute and may be executed and accessed by the second pointer 16b having the second attribute.

However, if one user executes a display object having a sharing attribute, an attribute corresponding to the user may be applied to the display object when the display object is executed.

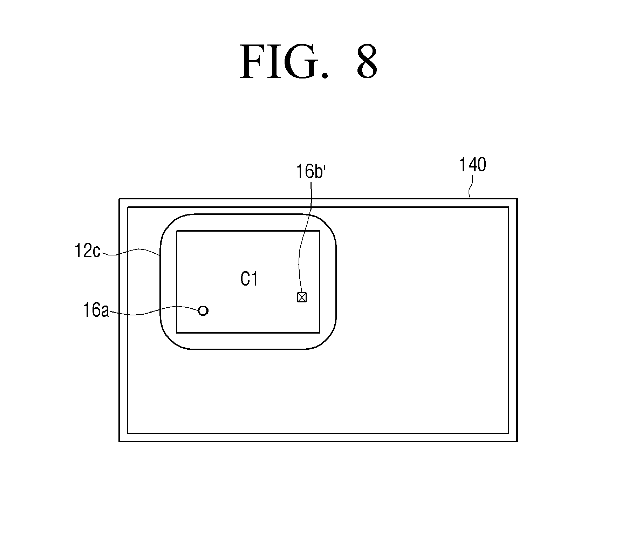

FIG. 8 is a view illustrating the C1 folder 12c which has the sharing attribute and is executed by a first user by using the first input means 171a, according to an exemplary embodiment of the present general inventive concept.

Referring to FIG. 8, since the first user executes the C1 folder 12c, a first attribute is temporarily applied when the C1 folder 12c is being executed. Therefore, the C1 folder 12c includes a circular border. The C1 shared folder 12c to which the first attribute has been applied may be accessed by only the first user. Therefore, the first pointer 16a to which the first attribute has been applied may be freely accessed or moved. However, a second pointer 16b' to which a second attribute has been applied is limitedly accessed. The second pointer 16b' which is limitedly accessed may be changed as described with reference to FIG. 7. However, a limit on the access of the second pointer 16b' may also be displayed with an "X" as illustrated in FIG. 8. A detailed controlling method of the controller 150 is as described with reference to FIG. 7, and thus its description will be omitted herein.

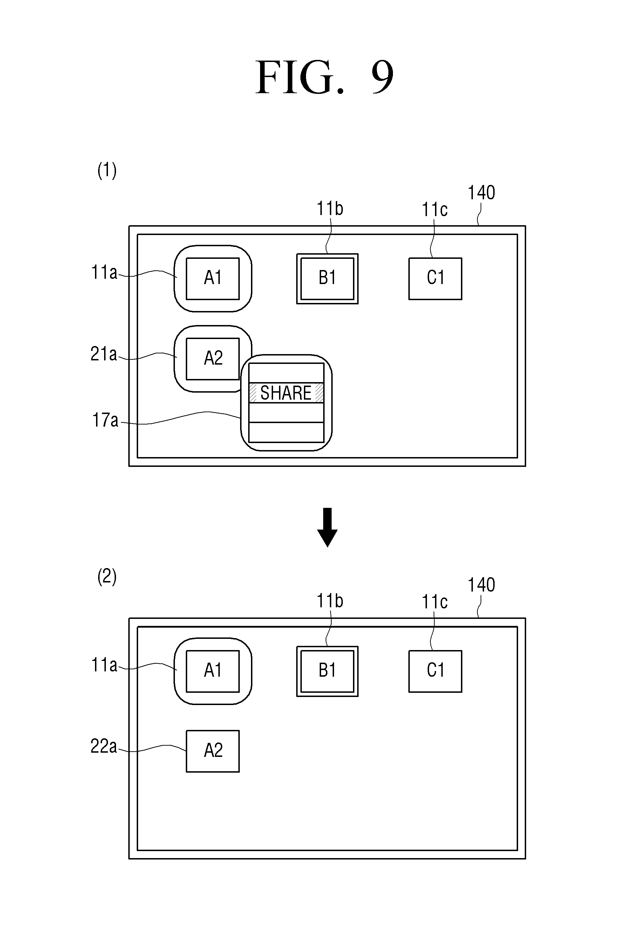

FIG. 9 is a view illustrating a display object which has a first attribute and is changed by a first user according to an exemplary embodiment of the present general inventive concept.

Referring to (1) of FIG. 9, A1 and A2 folders 11a and 21a having a first attribute, B1 folder 11b having a second attribute, and C1 folder 11c having a common attribute are displayed on the display 140. Since the A1 folder 21a has the first attribute, only the first input means 171a may access the A2 folder 21a. The first user opens a menu window 17a of the A2 folder 21a by using the first input means 171a. The menu window 17a may include several types of items and may also include an item which is to change attribute information. The first user may change the first attribute of the A2 folder 21a to a sharing attribute by using the first input means 171a.

Referring to (2) of FIG. 9, a first attribute of A2 folder 22a has been changed to a sharing attribute. Therefore, the A2 folder 22a has no circular border indicating the first attribute as shown in (1) of FIG. 9 and thus is displayed as a folder having no border like C1 folder 11c on the display 140.

In (1) of FIG. 9, the A2 folder 21a has the first attribute, and thus an access to the A2 folder 21a by using the second input means 171b is interrupted or prohibited. In (2) of FIG. 9, the first attribute of the A2 folder 22a is changed to the sharing attribute, and thus an access to the A2 folder 22a by using the second input means 171b is permitted. In an alternative embodiment, a first user may change attribute information of a shared object (e.g., a shared folder) such that the shared object may only be accessed by one or more specific input means. Further, attribute information of a shared object or an object having a first attribute accessible to the first input means may prohibited from being changed by other input means. For example, an administrator may only have authorization to change attribute information of a shared object, while a first user may only have authorization to change attribute information of an object having the first attribute.

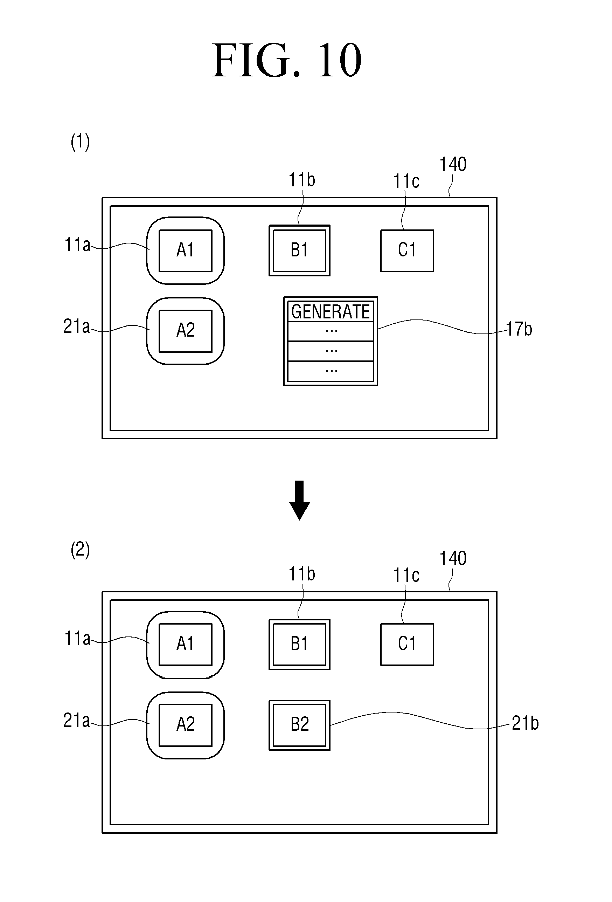

FIG. 10 is a view illustrating a generation of a display object performed by a second user according to an exemplary embodiment of the present general inventive concept.

Referring to (1) of FIG. 10, A1 and A2 folders 11a and 21a having a first attribute, B1 folder having a second attribute, and C1 folder 11c having a common attribute are displayed on the display 140. The second user opens a menu window 17b by using the second input means 171b. The menu window 17b may include several types of items and may also include an item which is to generate a new display object. The second user generates a new folder by using the second input means 171b.

Referring to (2) of FIG. 10, B2 folder 21b is newly generated. The B2 folder 21b is generated by using the second input means 171b and thus has a second attribute. Therefore, the B2 folder 21b has a square border. In an alternative embodiment, a second user may generate an object (e.g., a folder) using the second input means 171b and assign the new object attribute information corresponding to another user (e.g., a first attribute corresponding to the first input means) or attribute information which is shared (e.g., a sharing attribute indicating the object is commonly accessible).

As described above, a plurality of users access the display apparatus 100. However, one user may access the display apparatus 100.

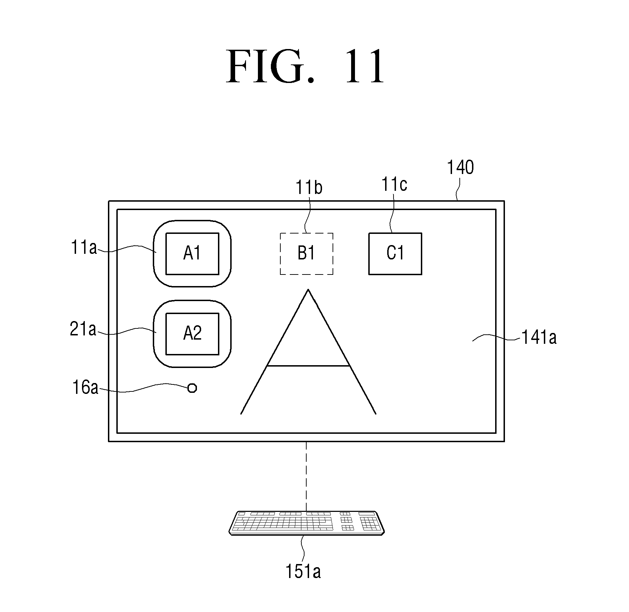

FIG. 11 is a view illustrating an access performed by one user by using one input apparatus 151a according to an exemplary embodiment of the present general inventive concept.

Referring to FIG. 11, a screen displayed on the display 140 is similar to a screen described with reference to FIG. 6. Therefore, only different parts of the screen of FIG. 11 from those of the screen of FIG. 6 will be described. Only a first user is connected to the display apparatus 100, and thus a background image 141a of the display 140 is an image corresponding to a first attribute. B1 folder 11b having a second attribute may be omitted. Alternatively, the B1 folder 11b may be displayed. However, since the B1 folder 11b has a different attribute from the background image 141a, an access to the B1 folder 11b by using the first input apparatus 151a may be prohibited. As can be seen from FIG. 11, B1 folder 11b may be shown using a broken dashed line to indicate that access by using the first input apparatus 151a is prohibited. C1 shared folder 11c may be accessed by using the first input apparatus 151a and thus is displayed on the display 140.

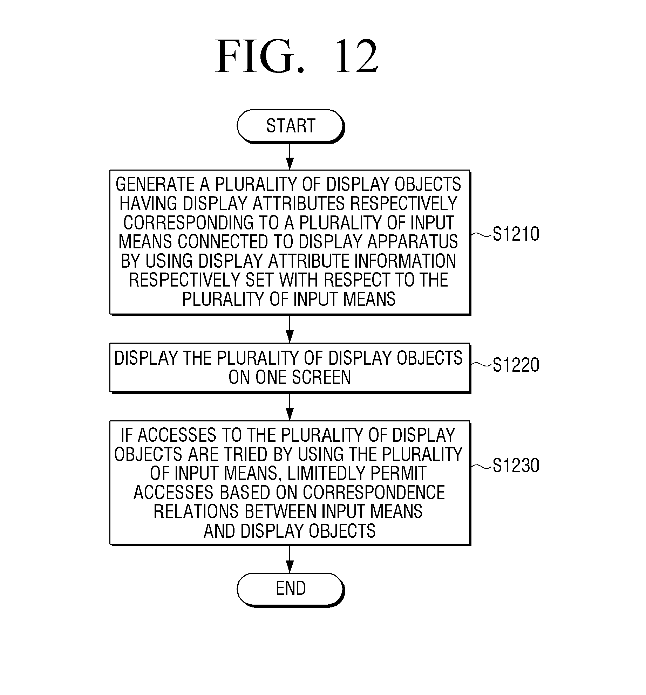

FIG. 12 is a flowchart illustrating a method of controlling a display apparatus according to an exemplary embodiment of the present general inventive concept.

Referring to FIG. 12, in operation S1210, a plurality of display objects having display attributes respectively corresponding to a plurality of input means connected to the display apparatus are generated by using display attribute information set with respect to the plurality of input means. As described above, the display attribute information may be set with respect to each of the plurality of input means. However, a plurality of input means (e.g., a keyboard and a mouse) may be set to one piece of display attribute information one by one according to types of the input means.

In operation S1220, the plurality of display objects are displayed on one screen. If an access to a first display object having a first attribute is performed by using a first one of a plurality of input means, a controller may change a display state of the first display object. The controller may generate pointers (or cursors) having display attributes separately set with respect to the plurality of input means, display the pointers on the screen of the display, and move corresponding pointers (or cursors) according to move commands input through the plurality of input means. Also, if each of the pointers (or cursors) moves to a display object to which an access is limited, the controller may change a display state of the corresponding pointer (or cursor). For example, the controller 150 may change a display state of an object so that the object becomes transparent or translucent or may set the object to be bounced.

In operation S1230, accesses to the plurality of display objects are tried by using the plurality of input means and are limitedly permitted based on correspondence relations between the input means and the display objects. If a second access is performed with respect to a first display object by using other input means except a first input means, the controller may ignore the second access.

A method of controlling a display apparatus by using a voice of a user as an input means will now be described.

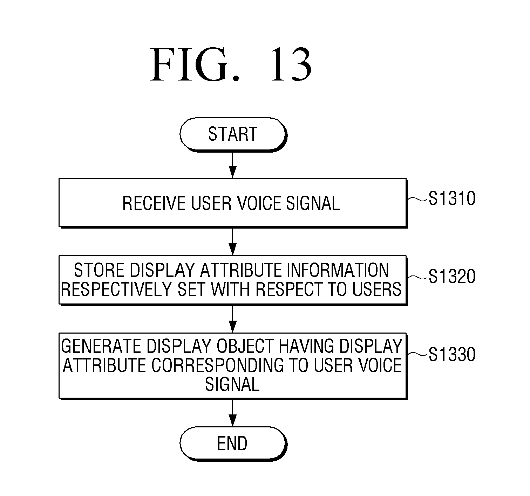

FIG. 13 is a flowchart illustrating a method of controlling a display apparatus by using a user voice according to an exemplary embodiment of the present general inventive concept.

As described above, the display apparatus 100 includes one or more microphones and may use a user voice as an input means. Reference voice information may be stored according to users to distinguish input voice signals. In operation S1310, the display apparatus 100 receives a user voice signal by using the microphone. The display apparatus 100 compares the user voice signal with the reference voice information to check or identify a user. In operation S1320, display attribute information set according to users is stored. In operation S1330, a display object having a display attribute corresponding to the recognized user voice signal is generated. If the user's voice is not recognized or is not pre-stored, then predetermined or default attribute information may be used according to preset initial values to correspond to the input means. The user's voice information may be stored in the storage unit for future use, and when the user subsequently inputs a voice signal the method according to FIG. 13 may be implemented. For example, assume a first user's voice has been stored in the storage unit. The first user is identified based on a comparison of the first user's input voice with the reference voice information, and corresponds to a first input means. Based on this information, an object may be displayed on the display apparatus with attribute information that corresponds to the first user and/or the first input means (e.g., a circular border around a folder). A further detailed method is as described above and thus will be omitted herein.

A method of controlling a display apparatus by using a user gesture as an input means will now be described.

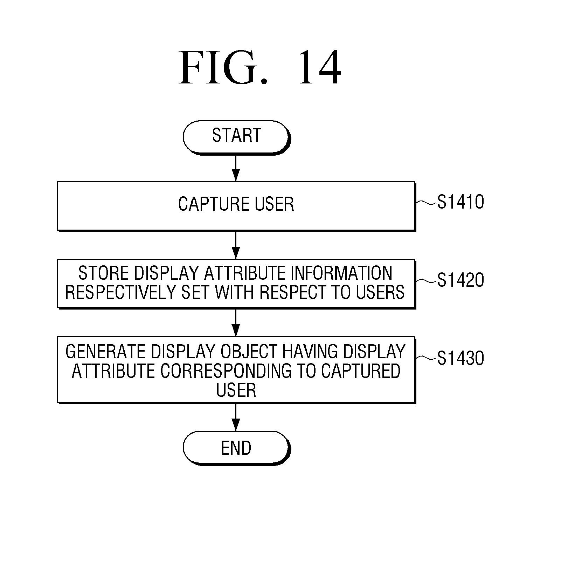

FIG. 14 is a flowchart illustrating a method of controlling a display apparatus by using a user gesture according to an exemplary embodiment of the present general inventive concept.

As described above, the display apparatus 100 includes one or more cameras to use (e.g., capture) a user gesture as an input means. The display apparatus 100 stores reference image information according to users to distinguish input users. In operation S1410, the display apparatus 100 captures a user by using the camera. The display apparatus 100 compares an image of the user with the reference image information to check the user. The image may be a face image or an image of another body part, and may include more than one image. In operation S1420, the display apparatus 100 stores display attribute information respectively set with respect to each user. In operation S1430, the display apparatus 100 generates a display object having a display attribute corresponding to the captured user. If the user's image is not recognized or is not pre-stored, then predetermined or default attribute information may be used according to preset initial values to correspond to the input means. The user's image may be stored in the storage unit for future use, and when the user's image is captured in subsequent uses, the method according to FIG. 14 may be implemented. For example, assume a first user's image has been stored in the storage unit. The first user is identified based on a comparison of the first user's input image with the reference image information, and corresponds to a first input means. Based on this information, an object may be displayed on the display apparatus with attribute information that corresponds to the first user and/or the first input means (e.g., a circular border around a folder). A further detailed method is as described above and thus will be omitted herein.

The methods according to the above-described various exemplary embodiments may be implemented as software to be installed in a display apparatus or a system.

In detail, according to an exemplary embodiment of the present general inventive concept, there may be installed a non-transitory computer readable medium which stores a program performing: storing display attribute information respectively set with respect to a plurality of input means; generating a plurality of display objects having display attributes respectively corresponding to the plurality of input means by using the display attribute information respectively set with respect to the plurality of input means; displaying the plurality of display objects on one screen; and, if accesses to the plurality of display objects are tried by using the plurality of input means, limitedly permitting the accesses based on correspondence relations between the input means and the display objects.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

The components constituting the display apparatus and corresponding methods for controlling the display apparatus according to the above-described example embodiments, may use one or more processors, which may include a microprocessor, central processing unit (CPU), digital signal processor (DSP), or application-specific integrated circuit (ASIC), as well as portions or combinations of these and other processing devices.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Although a few preferred embodiments have been shown and described, it will be appreciated by those skilled in the art that various changes and modifications might be made without departing from the scope of the invention, as defined in the appended claims.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an interface which is connected to a plurality of input means;
a storage which stores display attribute information respectively set with respect to the plurality of input means;
a display processor which generates a plurality of display objects having display attributes respectively corresponding to the plurality of input means by using the display attribute information respectively set with respect to the plurality of input means;
a display which displays the plurality of display objects on one screen; and
a controller which, if accesses to the plurality of display objects are tried by using the plurality of input means, limitedly permits the accesses based on correspondence relations between the plurality of input means and the plurality of display objects.

2. The display apparatus of claim 1, wherein if a first user access to a first display object having a display attribute corresponding to a first input means of the plurality of input means is performed by using the first input means, the controller controls the display processor to change a display state of the first display object according to the first user access, and if a second user access to the first display object is performed by using input means other than the first input mean, the controller ignores the second user access.

3. The display apparatus of claim 1 or 2, wherein the controller generates cursors having display attributes respectively set to the plurality of input means, displays the cursors on the screen of the display, moves corresponding cursors according to move commands input through the plurality of input means, and, if the cursors are moved to the display objects to which accesses are limited, controls the display processor to change a display state of a corresponding cursor.

4. The display apparatus of any one of claims 1 to 3, wherein at least one of the plurality of display objects is a shared object which is accessible by the plurality of input means.

5. The display apparatus of claim 4, wherein the shared object is an application icon, wherein if the application icon is selected by a first input means of the plurality of input means, the controller executes an application corresponding to the application icon, and generates and displays an execution screen of the application according to a display attribute corresponding to the first input means.

6. The display apparatus of any one of claims 1 to 5, further comprising:
a microphone which receives a user voice signal,
wherein the storage stores display attribute information respectively set with respect to users, and, if the user voice signal is input, the controller controls the display processor and the display to generate and display a display object having a display attribute corresponding to the user voice signal.

7. The display apparatus of any one of claims 1 to 6, further comprising:
at least one camera which captures an image of a user,
wherein the storage stores display attribute information respectively set with respect to users, and the controller controls the display processor and the display to generate and display a display object having a display attribute corresponding to the user.

8. A method of controlling a display apparatus, the method comprising:
generating a plurality of display objects having display attributes respectively corresponding to a plurality of input means connected to the display apparatus by using display attribute information respectively set with respect to the plurality of input means;
displaying the plurality of display objects on one screen; and
if accesses to the plurality of display objects are tried by using the plurality of input means, limitedly permitting the accesses based on correspondence relations between the plurality of input means and the plurality of display objects.

9. The method of claim 8, wherein:
the displaying of the plurality of display objects comprises: if a first user access to a first display object having a display attribute corresponding to a first input means of the plurality of input means is performed by using the first input means, changing a display state of the first display object according to the first user access; and
the limitedly permitting of the accesses comprises: if a second user access to the first display object is performed by using input means other than the first input means, ignoring the second user access.

10. The method of claim 8 or 9, wherein the displaying of the plurality of display objects comprises: generating cursors having display attributes respectively set to the plurality of input means, displaying the cursors on the screen of the display, moving corresponding cursors according to move commands input through the plurality of input means, and, if the cursors are moved to the display objects to which accesses are limited, changing a display state of a corresponding cursor.

11. The method of claims 8 to 10, wherein at least one of the plurality of display objects is a shared object which is accessible by the plurality of input means.

12. The method of claim 11, wherein the shared object is an application icon, wherein the generating of the display object comprises: if the application icon is selected by a first input means of the plurality of input means, executing an application corresponding to the application icon, and generating and displaying an execution screen of the application according to a display attribute corresponding to the first input means.

13. The method of any one of claims 8 to 12, further comprising:
receiving a user voice signal; and
storing display attribute information respectively set with respect to users,
wherein the generation of the display object comprises: if the user voice signal is input, generating a display object having a display attribute corresponding to the user voice signal.

14. The method of any one of claims 8 to 13, further comprising:
capturing an image a user; and
storing display attribute information respectively set with respect to users,
wherein the generation of the display object comprises: generating a display object having a display attribute corresponding to the user.
